(19) Europäisches Patentamt

European Patent Office

Office européen des brevets

(11) Veröffentlichungsnummer: **0 315 169 B1**

(12) **EUROPÄISCHE PATENTSCHRIFT**

(45) Veröffentlichungstag der Patentschrift: **29.07.92**

(21) Anmeldenummer: **88118322.2**

(22) Anmeldetag: **03.11.88**

(51) Int. Cl.⁵: **C04B 30/00**

(54) **Wärmedämmformkörper mit Umhüllung.**

(30) Priorität: **05.11.87 DE 3737459**

(43) Veröffentlichungstag der Anmeldung:
**10.05.89 Patentblatt 89/19**

(45) Bekanntmachung des Hinweises auf die
Patenterteilung:
**29.07.92 Patentblatt 92/31**

(84) Benannte Vertragsstaaten:
**AT BE CH DE ES FR GB IT LI NL SE**

(56) Entgegenhaltungen:
**EP-A- 0 029 227**
**AT-B- 369 726**
**DE-A- 3 418 637**

(73) Patentinhaber: **WACKER-CHEMIE GMBH**
**Hanns-Seidel-Platz 4**
**W-8000 München 83(DE)**

(72) Erfinder: **Bleeck, Ulrich, Dr. Dipl.-Ing.**
**Alte Landstrasse 30**
**W-8968 Durach(DE)**
Erfinder: **Reisacher, Hannes, Dipl.-Ing.(FH)**
**Sailerstrasse 16**
**W-8960 Kempten(DE)**
Erfinder: **Kratel, Günter, Dr. Dipl.-Chem.**
**Alpenblickstrasse 10**
**W-8968 Durach(DE)**
Erfinder: **Stohr, Günter, Dr. Dipl.-Chem.**
**Stuibenstrasse 14**
**W-8968 Durach(DE)**

## Beschreibung

Die Erfindung betrifft Wärmedämmformkörper mit Umhüllung.

Wärmedämmkörper auf Basis von verpreßtem, mikroporösem Wärmedämmstoff sind beispielsweise gemäß DE-A 30 33 515 bzw. gemäß der entsprechenden US-A 4359496 bekannt. Es ist weiterhin beispielsweise aus der oben genannten DE-A 30 33 515 oder aus der DE-A 34 18 637 bzw. aus der entsprechenden US-A 4636416 bekannt, derartige Formkörper teilweise oder vollständig mit Umhüllung, z.B. mit Glasfasergeweben, Alufolien oder anderem Kaschierungsmaterial zu versehen. Derartige Formkörper zeichnen sich vor allem im Bereich höherer Temperaturen, insbesondere im Bereich von etwa 200 °C bis 1000 °C, durch ausgezeichnete Isoliereigenschaften aus.

Wegen der geringen Festigkeit dieser Wärmedämmstoffe ist es Stand der Technik, die Formgebung während der Herstellung der Grundkörper auf Basis von mikroporösen Wärmedämmstoffen, also beim Verpressen der feinteiligen Metalloxide, zu realisieren und diese Grundkörper nachfolgend mit einer Umhüllung zu versehen. Nachteiligerweise können bei diesem Vorgehen nur planare Platten und einfache symmetrische, zylindrische Formkörper hergestellt werden. Sollen diese Grundkörper nachträglich konturiert werden, so kommt es schon nach geringen Verformungen zu Dichteunterschieden, was zu Rissen, Abplatzungen oder Trennungen und damit zur Zerstörung des Formkörpers führt.

Aufgabe der Erfindung ist es, diese Nachteile zu vermeiden und somit eine größere Formenvielfalt zu ermöglichen.

Gelöst wird diese Aufgabe durch Wärmedämmformkörper mit Umhüllung, die dadurch gekennzeichnet sind, daß ein Formling aus einem mit einer tiefziehfähigen Umhüllung versehenen Grundkörper auf Basis von verpreßtem, mikroporösem Wärmedämmstoff, wobei der Druck innerhalb der Umhüllung auf bis zu $10^{-6}$ bar vermindert ist, bei Drucken im Bereich von 1 t/m$^2$ bis 1000 t/m$^2$ geprägt wird (1 t/m$^2$ = 9,81 kPa).

Die erfindungsgemäßen Wärmedämmformkörper können unregelmäßige und/oder unterschiedliche geometrische Formen darstellen, wobei gleichbleibende physikalische Eigenschaften über den ganzen Körper gewährleistet sind. Sie können somit der Oberfläche des zu isolierenden Körpers konturengetreu angepaßt werden, wobei sie ihre aufgeprägte Form beibehalten, was für die Effektivität der Isolierung von entscheidender Bedeutung ist.

Als mikroporöser Wärmedämmstoff werden verpreßte, feinteilige Metalloxide eingesetzt. Folgende typische Zusammensetzungen für Wärmedämmaterial haben sich bewährt:

30 - 100 Gew.-% feinteiliges Metalloxid
0 - 50 Gew.-% Trübungsmittel
0 - 50 Gew.-% Fasermaterial
0 - 15 Gew.-% anorganisches Bindematerial.

Bevorzugte Zusammensetzungen enthalten:

30 - 89 Gew.-% feinteiliges Metalloxid
10 - 50 Gew.-% Trübungsmittel
1 - 50 Gew.-% Fasermaterial
0 - 5 Gew.-% anorganisches Bindematerial.

Besonders gute Ergebnisse werden mit folgenden Zusammensetzungen erreicht:

50 - 89 Gew.-% feinteiliges Metalloxid
20 - 40 Gew.-% Trübungsmittel
5 - 20 Gew.-% Fasermaterial
0,5 - 2 Gew.-% anorganisches Bindematerial.

Beispiele für feinteiliges Metalloxid sind pyrogen erzeugte Kieselsäuren, einschließlich Lichtbogenkieselsäuren, alkaliarme Fällungskieselsäuren, analog hergestelltes Aluminiumoxid, Titanoxid und Zirkonoxid, sowie deren Mischungen. Vorzugsweise werden pyrogen erzeugte Kieselsäure, Aluminiumoxid oder deren Mischung verwendet. Die feinteiligen Metalloxide weisen spezifische Oberflächen von vorzugsweise 50 - 700 m$^2$/g, insbesondere 70 -400 m$^2$/g, auf.

Beispiele für Trübungsmittel sind Ilmenit, Titandioxid, Siliciumcarbid, Eisen-II-Eisen-III-Mischoxid, Chromdioxid, Zirkonoxid, Mangandioxid, Eisenoxid, Siliciumdioxid, Aluminiumoxid und Zirkonsilikat, sowie deren Mischungen. Vorzugsweise werden Ilmenit und Zirkonsilikat verwendet. Die Trübungsmittel weisen vorteilhafterweise ein Absorptionsmaximum im Infrarotbereich zwischen 1,5 und 10 $\mu$ m auf.

Beispiele für Fasermaterial sind Glaswolle, Steinwolle, Basaltwolle, Schlackenwolle, keramische Fasern, wie sie aus Schmelzen von Aluminium- und/oder Siliciumoxid gewonnen werden, und Asbestfasern, sowie deren Mischungen. Vorzugsweise werden Fasern, gewonnen aus der Schmelze von Aluminium- und/oder Siliciumoxid, verwendet.

Als anorganische Bindemittel können alle Bindemittel, deren Einsatz in mikroporösen, verpreßten Wärmedämmstoffen bekannt ist, verwendet werden. Beispiele solcher Bindemittel sind beispielsweise in der EP-A-29227 offenbart, auf die in diesem Zusammenhang ausdrücklich verwiesen wird. Vorzugsweise werden Boride des Aluminiums, des Titans, des Zirkons, des Calciums, Silicide, wie Calciumsilicid und Calcium-Aluminium-Silicid, insbesondere Borcarbid eingesetzt. Beispiele für weitere Bestandteile sind basische Oxide, insbesondere Magnesiumoxid, Calciumoxid oder Bariumoxid.

Die Grundkörper der erfindungsgemäßen Wärmedämmformkörper auf Basis von verpreßtem, mikroporösem Wärmedämmstoff können neben diesen verpreßten, mikroporösen Wärmedämmstoffen aus Schichten weiterer Isoliermaterialien bestehen. Hierbei hat sich die Anordnung der unterschiedlichen Materialien als Schichtkörper bewährt. Die Schichten können durch organische oder anorganische Bindemittel wie Wasserglas unterschiedlicher Zusammensetzung, Kieselsol oder keramische Kleber, aber auch durch mechanische Befestigungen wie Klammern miteinander verbunden sein.

Beispiele weiterer Temperaturisoliermaterialien sind Aluminiumsilikatmatten, Calciumsilikatmatten, Vliese und Gewebe aus Glaswolle, Steinwolle, Basaltwolle, Papiere, Pappe und Cellulose, aber auch Metallfolien.

Wird ein Schichtkörper unterschiedlicher Wärmedämmstoffe verwendet, so sind zweischichtige Körper bevorzugt, bei denen eine Schicht erfindungsgemäß aus verpreßtem mikroporösem Wärmedämmstoff besteht und die zweite Schicht vorzugsweise aus Aluminiumsilikatmatten, Calciumsilikatmatten, Vliesen und Geweben aus Glaswolle, Steinwolle oder Basaltwolle besteht.

Die Wärmedämmformkörper auf Basis von verpreßtem, mikroporösem Wärmedämmstoff sind erfindungsgemäß mit einer tiefziehfähigen Umhüllung versehen, wobei der Druck innerhalb der Umhüllung auf bis zu $10^{-6}$ bar vermindert ist. Da innerhalb der Umhüllung immer ein Unterdruck herrscht, müssen die Umhüllungen natürlich gasdicht sein und den Grundkörper vollständig einschließen. Die Höhe des angelegten Vakuums richtet sich nach dem erforderlichen Verformungsgrad. Bevorzugt sind Unterdrücke im Bereich von $10^{\circ}$ bis $10^{-3}$ bar. Ebenso richtet sich die Formbarkeit nach den Tiefzieheigenschaften der Umhüllung. Für die erfindungsgemäßen Wärmedämmformkörper sind nur solche Umhüllungen geeignet, bei denen während des Verformungsvorgangs keine Materialtrennung durch Dickenabnahme auftritt. Vorzugsweise werden Umhüllungen verwendet, die einen Verformungsgrad von 1% bis 100% aufweisen, d.h. in der Länge um 1% bis 100% dehnbar sind. Insbesondere werden Umhüllungen mit einem Verformungsgrad von 30% bis 60% verwendet. Bevorzugte Materialien für die Umhüllungen sind Folien auf Basis organischer Polymere, die auch thermoplastisch sein können, Metallfolien oder deren Kombinationen in der Form von Verbundfolien. Die Dicke der Folien richtet sich weitgehend nach dem erforderlichen Verformungsgrad. Als vorteilhaft haben sich folgende Dicken der Folien erwiesen:

Folien auf Basis organischer Polymere
5 bis 200 $\mu$ m, insbesondere 50 bis 70 $\mu$ m,
Metallfolien
5 bis 500 $\mu$ m, insbesondere 40 bis 50 $\mu$ m,
Verbundfolien
7 bis 600 $\mu$ m, insbesondere 50 bis 200 $\mu$ m.

Beispiele für Umhüllungsmaterial sind Folien auf Basis organischer Polymere aus Acrylester-Butadien-Kautschuk, Acrylester-2-Chlorethylvinylether-Copolymeren, Terpolymeren aus Tetrafluorethylen, Trifluornitrosomethan und Nitrosoperfluorbuttersäure, Acylester-Acrylnitril-Copolymeren, Urethan-Kautschuk auf Polyester-Basis, Polychlortrifluorethylen, Chlorpolyethylen, Epichlorhydrin-Kautschuk, Chloropren-Kautschuk, Chlorsulfonylpolyethylen, Epichlorhydrin-Copolymeren, Ethylen-Propylen-Terpolymeren, Ethylen-Propylen-Copolymeren, Urethan-Kautschuk auf Polyethylen-Basis, Vinylidenfluorid-Hexafluorpropylen-Copolymeren, Isobutylen-Isopren-Kautschuk, Polybutylen, Isopren-Kautschuk, Methylsilicon-Kautschuk mit Fluorgruppen, Methylsilicon-Kautschuk mit Phenylgruppen, Methylsilicon-Kautschuk mit Phenyl- und Vinylgruppen, Methylsiliconkautschuk, Methylsiliconkautschuk mit Vinylgruppen, Acrylnitril-Butadien-Kautschuk, Acrylnitril-Chloropren-Kautschuk, Pyridin-Butadien-Kautschuk, Styrol-Butadien-Kautschuk, Styrol-Chloropren-Kautschuk, Styrol-Isopren-Kautschuk, Acrylnitril-Butadien-Styrol-Copolymeren, Acrylnitril-Methylmethacrylat-Copolymeren, Celluloseacetat, Celluloseacetobutyrat, Celluloseacetopropionat, Kresolformaldehyd, Carboxymethylcellulose, Cellulosenitrat, Cellulosepropionat, Kasein, Ethylcellulose, Epoxid, Melaminformaldehyd, Polyamid, Polycarbonat, Polychlortrifluorethylen, Polydiallylphthalat, Polyethylen, chloriertes Polyethylen, Polyethylenterephthalat, Phenolformaldehyd, Polyisobutylen, Polymethylmethacrylat, Polyoxymethylen, Polyphenylensulfid, Polypropylen, Polystyrol, Polytetrafluorethylen, Polyurethan, Polyvinylacetat, Polyvinylalkohol, Polyvinylbutyrat, Polyvinylchlorid, Vinylchlorid-Vinylacetat-Copolymeren, chloriertes Polyvinylchlorid, Polyvinylidenchlorid, Polyvinylidenfluorid, Polyvinylfluorid, Polyvinylformiat, Polyvinylcarbazol, styrol-Acrylnitril-Copolymeren, Styrol-Butadien-Copolymeren, Silikonen, Styrol- $\alpha$ -Methylstyrol-Copolymeren, Harnstofformaldehyd und ungesättigten Polyestern, wobei diese Kunststoffe durch Fasern, wie Glasfasern, Asbestfasern, Borfasern, Kohlenstofffasern, Metallfasern, Synthesefasern oder Wiskern verstärkt sein können, oder Metallfolien aus Aluminium, Kupfer, Eisen, Eisenlegierungen und Legierungen aus Aluminium und Magnesium beziehungsweise Silicium.

Bevorzugte Folien auf Basis organischer Polymere sind Folien auf Basis von Polyethylen und/oder Polyamid und/oder Polyvinylchlorid.

Bevorzugte Metallfolien sind Aluminiumfolien.

Bevorzugte Verbundfolien haben eine Schichtfolge aus thermoplastischem Material/Metallfolie/thermoplastisches Material oder Metallfolie/thermoplastisches Material. Beispiele solcher Verbundfolien haben Schichtfolgen aus Polyamid/Aluminium/Polyethylen;

Polypropylen/Aluminium/Polypropylen;
Polypropylen/Aluminium/Polyamid und Polypropylen;
Copolymerisat aus Vinylchlorid und Vinylacetat/Aluminium.

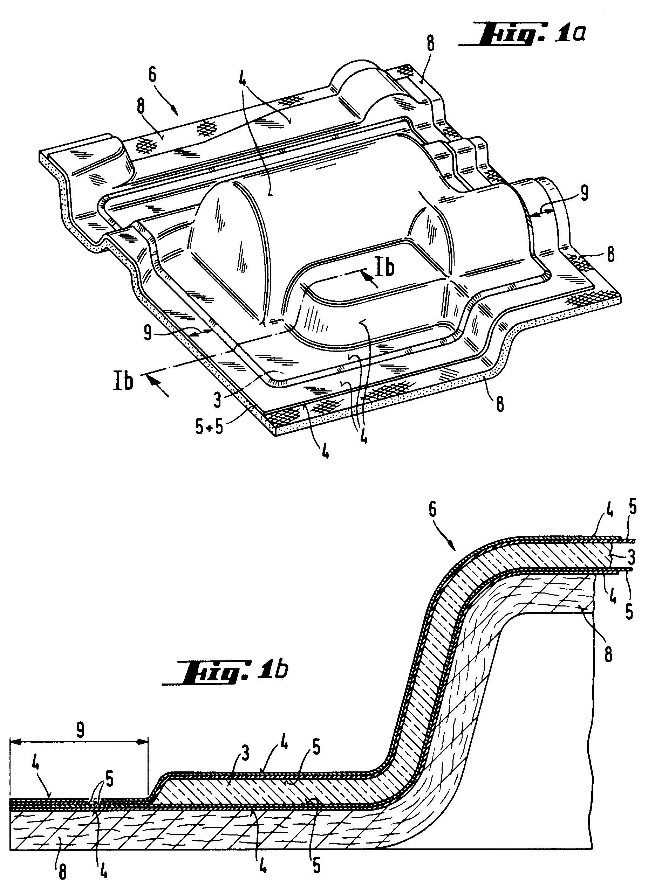

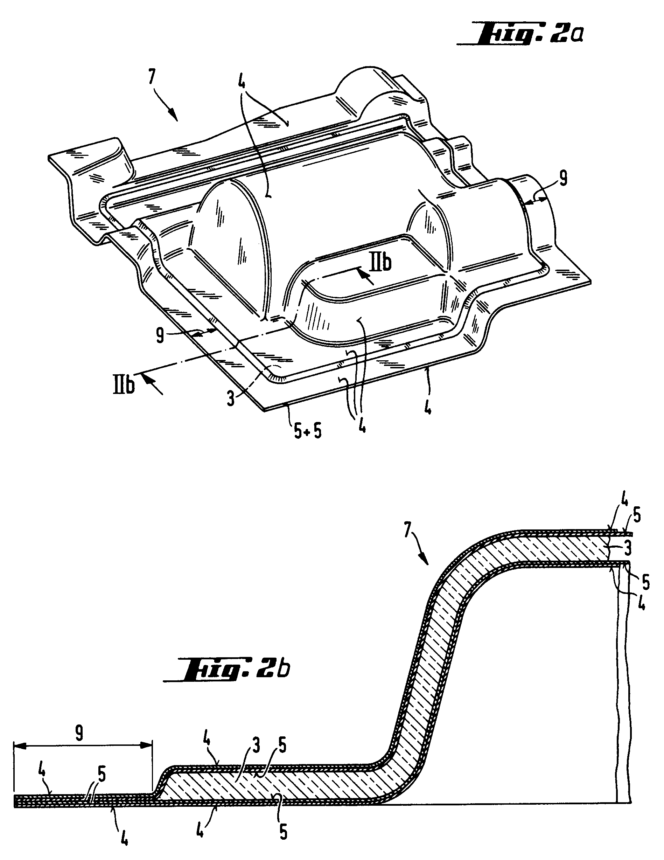

Die erfindungsgemäßen Wärmedämmformkörper können unregelmäßige und/oder unterschiedliche geometrische Formteile darstellen. Beispiele für erfindungsgemäße Wärmedämmformkörper sind in den Abbildungen 1 bis 3 dargestellt.

Zur Herstellung der erfindungsgemäßen Wärmedämmformkörper werden zunächst die Grundkörper auf Basis von mikroporösem, verpreßtem Wärmedämmstoff nach an sich bekannten Methoden vorgefertigt. Vorzugsweise umfaßt die Fertigung folgende Verfahrensschritte:

a) Vorverdichten der Wärmedämmischung auf Basis von feinverteiltem Metalloxid bei Drücken von 1 bis 5 bar, insbesondere 2 bar oder ungefähr 2 bar;

b) Verpressen des vorverdichteten Materials in die Form von planaren Platten oder einfachen, symmetrischen, zylindrischen Körpern bei Enddrücken von 8 bis 20 bar, wobei die Dicke der resultierenden Formen vorzugsweise 1 bis 25 mm, insbesondere 2 bis 10 mm, beträgt;

c) gegebenenfalls Erhitzen des verpreßten Körpers bei Temperaturen von 500 bis 900 °C.

Beim Vorverdichten bzw. Verpressen sollen die in der Schüttung eingeschlossenen Gase entweichen können. Daher erfolgt das Verdichten und Verpressen vorzugsweise unter Anlegen von Unterdruck. Das Entgasen kann auch schon vor dem Verdichten bzw. Verpressen erfolgen.

Der vorgefertigte Grundkörper, der gegenbenenfalls noch mit Schichten weiterer Temperaturisoliermaterialien versehen sein kann, wobei deren Aufbringen auf den vorgefertigten Körper auf Basis von verpreßtem, mikroporösem Wärmedämmstoff in an sich bekannter Weise durch Auflegen, Aufkleben unter Druckeinwirkung mit Klebern wie Kieselsol, Wasserglas und keramischen Klebern oder mechanische Befestigung wie Klammern erfolgt, wird anschließend in an sich bekannter Weise durch Auflegen mit einer Umhüllung versehen. Schließlich wird innerhalb der Umhüllung ein Unterdruck von bis zu $10^{-6}$ bar, vorzugsweise von $10°$ bis $10^{-3}$ bar, erzeugt. Dieser Unterdruck kann durch konventionelles Evakuieren mit einer Vakuumpumpe, wobei abschließend die Umhüllung luftdicht verschlossen wird, beispielsweise durch Abschweißen der vorstehend beschriebenen Verbundfolien, oder durch Einschrumpfen in dazu geeignete, vorstehend beschriebene, thermoplastische Folien, erzeugt werden.

Der so erhaltene Formling wird bei Drücken im Bereich von 1 t/m² bis 1000 t/m², vorzugsweise 1 t/m² bis 800 t/m², insbesondere 1 t/m² bis 20 t/m², geprägt. Die Prägung erfolgt mit an sich bekannten Pressen, wobei die Preßwerkzeuge eine Temperatur von vorzugsweise 15 °C bis 300 °C, inbesondere 15 °C bis 25 °C oder 150 °C bis 250 °C, aufweisen.

Falls gewünscht, kann der Formling vor dem Prägen auf einen Träger aufgebracht werden, der dann beim Prägen mitverformt wird. Grundsätzlich sind als solche Trägermaterialien alldiejenigen möglich, die die gewünschte Verformung zulassen. Nach der gewünschten Verformung richtet sich natürlich auch die Dicke dieser Träger. Beispiele für Materialien solcher Träger sind Matten aus Gemischen von Baumwolle und Synthetikfasern, Metallteile bestehend aus Metallen wie Eisen, Kupfer und Aluminium, sowie insbesondere deren Legierungen und Kunststoffteile bestehend aus Kunststoffen wie Polypropylen, Polyethylen, Polytetrafluorethylen oder Polyvinylchlorid. Das Aufbringen der Formlinge auf den Träger kann in an sich bekannter Weise durch Auflegen oder Aufkleben unter Druckeinwirkung erfolgen. Beispiele für hierbei verwendete Kleber sind Wassergläser oder Harze. Auch die mechanische Befestigung wie z.B. mit Stiften oder Klammern im überstehenden Randbereich der Umhüllung, innerhalb dessen sich kein Vakuum befindet, ist möglich.

Die erfindungsgemäßen Wärmedämmformteile finden überall dort Verwendung wo es nötig ist, thermisch beanspruchte Teile wirkungsvoll zu isolieren, insbesondere dann, wenn die Temperatur und Platzverhältnisse einen hochdämmenden thermischen Isolator zwingend erforderlich machen. Einsatzmöglichkeiten der erfindungsgemäßen Wärmedämmformkörper sind im Kraftfahrzeugbereich beispielsweise die Dämmung des Motorraums, des Motorraum-Fahrgastzellenbereiches und der Abgasanlage. Weitere Bereiche, in denen der erfindungsgemäße Wärmedämmformkörper eingesetzt werden kann, sind die Luftfahrt, die Meß- und Regeltechnik, die Wehrtechnik und der Anlagenbau.

Beispiel 1:

Eine 5 mm dicke verpreßte, mikroporöse Wärmedämmplatte (3) der Zusammensetzung:

62,5 Gew.-% pyrogen erzeugte Kieselsäure

31,7 Gew.-% Ilmenit

5,0 Gew.-% Aluminiumsilikatfaser

0,8 Gew.-% Borcarbid

wurde mit einer 40 $\mu$ m Aluminumfolie (4), welche mit einer 35 $\mu$ m starken Polyethylen-Polyamid-Siegellackschicht (5), beschichtet war, versehen, und die Umhüllung wurde, nachdem innerhalb der Umhüllung (4; 5) ein Unterdruck von $10^{-2}$ bar erzeugt wurde, im Randbereich verschweißt, wodurch ein Rand-Siegelbereich (9) entstand.

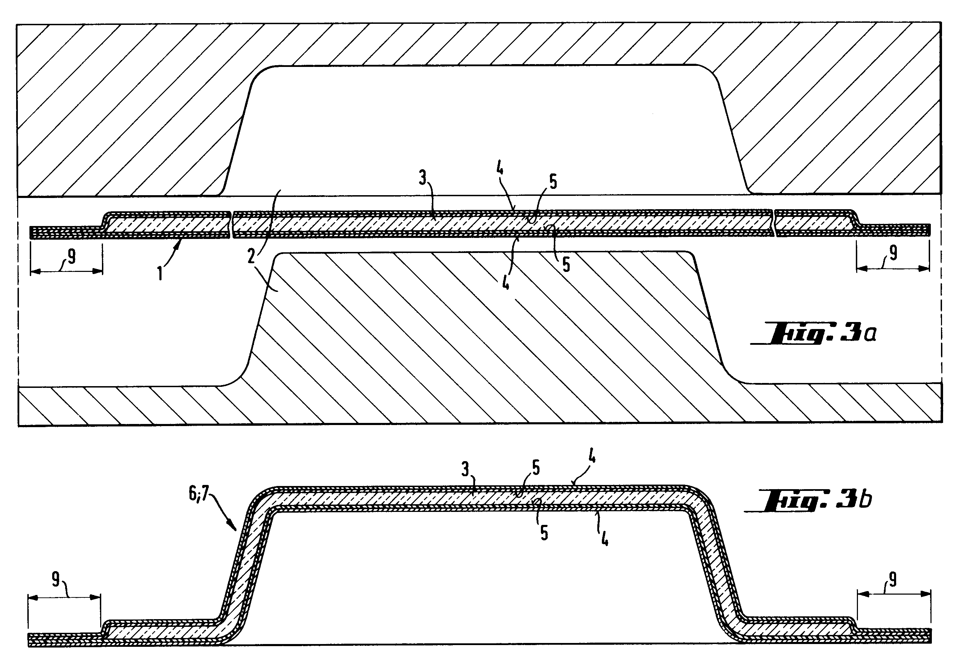

Hierdurch wurde ein flacher Formling (1) (Figur 3a) erhalten, welcher in seinem Randbereich (9) gesiegelt ist. Dieser flache Formling (1) wurde dann unter einem Druck von 100 t/m$^2$ und einer Temperatur des Preßwerkzeuges (2) von 200° C zu den in den Abbildungen 1a bis 2b und 3b dargestellten geformten Körpern (6; 7) geprägt.

Die Figuren 1a und 1b zeigen, daß der geformte Körper (6) auch auf einen Träger, hier eine Geräuschdämmung (8), aufgebracht sein kann.

Die Verformungsgrade betrugen in einigen Bereichen bis zu 60%. Die so hergestellten Teile blieben formstabil, wiesen eine einwandfreie unbeschädigte Oberfläche auf und zeigten gleichbleibende Wärmeleitzahlen über den ganzen geformten Körper.

Beispiel 2:

Die Vorgehensweise gemäß Beispiel 1 wurde wiederholt mit der Abänderung, daß die mikroporöse Wärmedämmplatte eine Zusammensetzung von
61 Gew.-% pyrogen erzeugtem Aluminiumoxid
31,7 Gew.-% Ilmenit
6,5 Gew.-% Aluminiumsilikatfaser
0,8 Gew.-% Borcarbid
aufwies.

Beispiel 3:

Die Vorgehensweise gemäß Beispiel 1 wurde wiederholt mit der Abänderung, daß die mikroporöse Wärmedämmplatte eine Zusammensetzung von
52,5 Gew.-% pyrogen erzeugter Kieselsäure
26,5 Gew.-% Ilmenit
20 Gew.-% Aluminiumsilikatfaser
1 Gew.-% Borcarbid
aufwies.

Beispiel 4:

Die Vorgehensweise gemäß Beispiel 1 wurde wiederholt mit der Abänderung, daß unter einem Druck von 152 t/m$^2$ geprägt wurde.

Beispiel 5:

Die Vorgehensweise gemäß Beispiel 4 wurde wiederholt mit der Abänderung, daß die Temperatur des Preßwerkzeugs 20 ° C betrug.

Beispiel 6:

Die Vorgehensweise gemäß Beispiel 1 wurde wiederholt mit der Abänderung, daß die Umhüllung aus einer Verbundfolie mit der Schichtfolge
25 μ m Polyamid
45 μ m Aluminium
50 μ m Polyethylen

bestand.

Beispiel 7:

Die Vorgehensweise gemäß Beispiel 1 wurde wiederholt mit der Abänderung, daß die Umhüllung aus einer Verbundfolie mit der Schichtfolge
30 μ m Polypropylen
45 μ m Aluminium
75 μ m Polypropylen
bestand.

Beispiel 8:

Die Vorgehensweise gemäß Beispiel 1 wurde wiederholt mit der Abänderung, daß die Umhüllung aus einer Verbundfolie mit der Schichtfolge
30 μ m Polypropylen
45 μ m Aluminium
15 μ m Polyamid
75 μ m Polypropylen
bestand.

Beispiel 9:

Die Vorgehensweise gemäß Beispiel 1 wurde wiederholt mit der Abänderung, daß die Umhüllung aus einer Verbundfolie mit der Schichtfolge
12 μ m Polyethylenterephthalat
45 μ m Aluminium
75 μ m Polypropylen
bestand.

Beispiel 10:

Die Vorgehensweise gemäß Beispiel 1 wurde wiederholt mit der Abänderung, daß die Umhüllung aus einer Verbundfolie mit der Schichtfolge
25 μ m Copolymerisat aus Vinylchlorid und Vinylacetat
45 μ m Aluminium
bestand.

Beispiel 11:

Die Vorgehensweise gemäß Beispiel 1 wurde wiederholt mit der Abänderung, daß die Umhüllung aus einer Verbundfolie mit der Schichtfolge
20 μ m Polyethylen
35 μ m Polyamid
bestand.

Beispiel 12:

Die Vorgehensweise gemäß Beispiel 1 wurde wiederholt mit der Abänderung, daß auf die Schicht, bestehend aus mikroporösem Dämmstoff, mittels Kieselsol eine 1mm dicke Silikatmatte aufgeklebt war.

Beispiel 13:

Die Vorgehensweise gemäß Beispiel 1 wurde wiederholt mit der Abänderung, daß der Formling mittels eines Phenolharzes auf einen Träger, bestehend aus einem Baumwollmischgewebeverbund, aufgeklebt wurde und unter einem Druck von 90 t/m² und einer Temperatur des Preßwerkzeuges von 160 °C geprägt wurde.

## Patentansprüche

1. Wärmedämmformkörper mit Umhüllung, dadurch erhältlich, daß ein Formling aus einem mit einer tiefziehfähigen Umhüllung versehenen Grundkörper auf Basis von verpreßtem, mikroporösem Wärmedämmstoff, wobei der Druck innerhalb der Umhüllung auf bis zu $10^{-6}$ bar vermindert ist, bei Drücken im Bereich von 9,81 kPa bis 9,81 MPa (1 t/m² bis 1000 t/m²) geprägt wird.

2. Wärmedämmformkörper nach Anspruch 1, dadurch gekennzeichnet, daß der verpreßte, mikroporöse Wärmedämmstoff aus
30 - 100 Gew.-% feinteiligem Metalloxid
0 - 50 Gew.-% Trübungsmittel
0 - 50 Gew.-% Fasermaterial
0 - 15 Gew.-% anorganischem Bindematerial
besteht.

3. Wärmedämmformkörper nach Anspruch 1 oder 2, dadurch gekennzeichnet, daß die feinteiligen Metalloxide eine spezifische Oberfläche von 50 - 700 m²/g aufweisen.

4. Wärmedämmformkörper nach einem der Ansprüche 1 bis 3, dadurch gekennzeichnet, daß als feinteilige Metalloxide pyrogen erzeugte Kieselsäuren, einschließlich Lichtbogenkieselsäuren, alkaliarme Fällungskieselsäuren, analog hergestelltes Aluminiumoxid, Titanoxid und Zirkonoxid, sowie deren Mischungen eingesetzt werden.

5. Wärmedämmformkörper nach einem der Ansprüche 1 bis 4, dadurch gekennzeichnet, daß als feinteilige Metalloxide pyrogen erzeugte Kieselsäure, Aluminiumoxid oder deren Mischung eingesetzt werden.

6. Wärmedämmformkörper nach einem der Ansprüche 1 bis 5, dadurch gekennzeichnet, daß die Trübungsmittel ein Absorptionsmaximum im Infrarotbereich zwischen 1,5 und 10 μm aufweisen.

7. Wärmedämmformkörper nach einem der Ansprüche 1 bis 6, dadurch gekennzeichnet, daß Umhüllungen mit einem Verformungsgrad von 1% bis 100% verwendet werden.

8. Wärmedämmformkörper nach einem der Ansprüche 1 bis 7, dadurch gekennzeichnet, daß der Grundkörper neben dem verpreßten, mikroporösen Wärmedämmstoff Schichten weiterer Isoliermaterialien aufweist.

9. Wärmedämmformkörper nach einem der Ansprüche 1 bis 8, dadurch gekennzeichnet, daß die Prägung mit an sich bekannten Pressen erfolgt, wobei die Preßwerkzeuge eine Temperatur von 15 °C bis 300 °C aufweisen.

10. Wärmedämmformkörper nach einem der Ansprüche 1 bis 9, dadurch gekennzeichnet, daß der Formling vor dem Prägen auf einen Träger aufgebracht wird.

## Claims

1. A heat insulating moulding having a covering which may be obtained in that a shaped body comprising a basic body based on a pressed, microporous heat insulation material provided with a deep-drawable covering, the pressure within the covering having been reduced to up to $10^{-6}$ bar, is embossed at pressures in the range from 9.81 kPa to 9.81 MPa (1 t/m² to 1000 t/m²).

2. A heat insulating moulding according to Claim 1, characterised in that the pressed, microporous heat insulation material comprises
30 - 100 % by weight of finely divided metal oxide
0 - 50 % by weight of opacifier
0 - 50 % by weight of fibre material
0 - 15 % by weight of inorganic binder material.

3. A heat insulating moulding according to Claim 1 or 2, characterised in that the finely divided metal oxide has a specific surface area of 50 - 700 m²/g.

4. A heat insulating moulding according to any of Claims 1 to 3, characterised in that the finely divided metal oxide employed is a pyrogenically produced silica, including an arc silica, a low-alkali precipitation silica, an analogously prepared alumina, titanium oxide or zirconium oxide, or a mixture thereof.

5. A heat insulating moulding according to any of Claims 1 to 4, characterised in that the finely divided metal oxide employed is pyrogenically produced silica, alumina or a mixture thereof.

6. A heat insulating moulding according to any of Claims 1 to 5, characterised in that the opacifier has an absorption maximum in the infrared region between 1.5 and 10 $\mu$m.

7. A heat insulating moulding according to any of Claims 1 to 6, characterised in that the covering used has a degree of deformation from 1% to 100%.

8. A heat insulating moulding according to any of Claims 1 to 7, characterised in that the basic body contains layers of further insulation materials in addition to the pressed, microporous heat insulation material.

9. A heat insulating moulding according to any of Claims 1 to 8, characterised in that the embossing is carried out using presses which are known per se, the press tools having a temperature from 15°C to 300°C.

10. A heat insulating moulding according to any of Claims 1 to 9, characterised in that the shaped body is applied, before embossing, to a substrate.

**Revendications**

1. Corps façonnés calorifuges avec enveloppe, que l'on peut obtenir par le fait qu'un aggloméré, en un corps de base pourvu d'une enveloppe emboutissable, à base d'un matériau calorifuge microporeux comprimé, la pression à l'intérieur de l'enveloppe étant abaissée à $10^{-6}$ bar, est marqué sous une pression comprise entre 1 et 1000 t/m² (1 t/m² = 9,81 kPa).

2. Corps façonné calorifuge selon la revendication 1, caractérisé en ce que le matériau calorifuge microporeux comprimé a la composition suivante :
    30-100 % en poids d'un oxyde métallique finement divisé
    0- 50 % en poids d'un agent opacifiant
    0- 50 % en poids d'un matériau fibreux
    0- 15 % en poids d'un matériau liant minéral

3. Corps façonné calorifuge selon la revendication 1 ou 2, caractérisé en ce que les oxydes métalliques finement divisés ont une aire spécifique de 50-700 m²/g.

4. Corps façonné calorifuge selon l'une des revendications 1 à 3, caractérisé en ce qu'on utilise comme oxydes métalliques finement divisés des silices pyrogènes, parmi lesquelles les silices à arc électrique, les silices de précipitation à faible teneur en métaux alcalins, l'oxyde d'aluminium, l'oxyde de titane et l'oxyde de zirconium obtenus d'une manière analogue, ainsi que leurs mélanges.

5. Corps façonné calorifuge selon l'une des revendications 1 à 4, caractérisé en ce qu'on utilise comme oxydes métalliques finement divisés de la silice pyrogène, de l'oxyde d'aluminium ou leurs mélanges.

6. Corps façonné calorifuge selon l'une des revendications 1 à 5, caractérisé en ce que les agents opacifiants ont un maximum d'absorption dans l'infrarouge de 1,5 à 10 $\mu$m.

7. Corps façonné calorifuge selon l'une des revendications 1 à 6, caractérisé en ce qu'on utilise des enveloppes ayant un degré de déformation de 1 à 100 %.

8. Corps façonné calorifuge selon l'une des revendications 1 à 7, caractérisé en ce que le corps de base comporte, outre le matériau calorifuge microporeux comprimé, des couches d'autres matériaux isolants.

9. Corps façonné calorifuge selon l'une des revendications 1 à 8, caractérisé en ce que le marquage est réalisé par des presses connues en soi, les outillages de compression ayant une température de 15 à 300°C.

10. Corps façonné calorifuge selon l'une des revendications 1 à 9, caractérisé en ce que l'ébauche est, avant le marquage, appliquée sur un support.

Fig. 1a

Fig. 1b

**Fig. 2a**

7

4

9

IIb

9

IIb

3

5+5

4

4

**Fig. 2b**

7

4
5
3
5
4

9

4
5

4

4
3
5

4
5

Fig. 3a

Fig. 3b